# EUROPEAN PATENT APPLICATION

(11) **EP 2 355 439 A1**
(43) Date of publication of application: **10.08.2011**
(21) Application number: 10152405.6
(22) Date of filing: 02.02.2010
(51) Int. Cl.: H04L 29/06, H04W 12/06

(54) **Accessing restricted services**

(71) Applicant: Swisscom AG, 3050 Bern (CH)
(72) Inventor: De Froment, Eric, 3072, Ostermundigen (CH)
(74) Representative: BOVARD AG

(57) **Abstract**

The present invention relates to a method for a communication device (101) having internet protocol connectivity and cellular network connectivity to access restricted information in a communication network (N₁) operating based on internet protocol. The method comprises: (a) establishing a cellular communication network channel between the communication device (101) and a first network element (111) in the communication network for accessing a second network element (105); (b) receiving security information from the second network element (105) on the cellular communication network channel for authenticating a user of the communication device (101); and (c) once the user has been successfully authenticated, then accessing the restricted information by using an internet protocol channel, wherein the internet protocol channel is not a cellular communication network channel.

## Description

### TECHNICAL FIELD

The present invention relates to a new method of accessing restricted services in a communication network. The invention likewise relates to a corresponding computer program product, to communication network elements and to a communication system.

### BACKGROUND OF THE INVENTION

Geoblocking is a technology that is used to prevent access to web sites from visitors in certain countries or regions. Currently it is mainly used by traditional broadcast companies who are moving their television, radio and music content online. Because of distribution contracts with the producers of these programmes, many web sites limit access to people within their own country.

Whenever a person connects to the internet, their computer or mobile device is assigned a so-called internet protocol (IP) address. This is a sequence of numbers. The IP address is assigned to a network user by an internet service provider (ISP). Therefore, it is possible to say that a particular IP address is from a particular country or even city. Site owners that want to use geoblocking choose to only allow access to a particular range of IP addresses or to block certain ranges.

It is, however, possible to use IP address spoofing to gain access to information content that is normally restricted to users in certain geographical areas. In computer networking, the term IP address spoofing refers to the creation of IP packets with a forged (spoofed) source IP address with the purpose of concealing the identity of the sender.

The principles of geoblocking can be equally applied to subnetworks with restricted access, such as company networks, also known as intranets.

The problem with known geoblocking solutions is that some roaming customers who are travelling cannot gain access to all or some of the network services that are normally accessible when in their homeland network. IP address spoofing is not considered to be a solution to this problem. First, it is generally not considered acceptable to falsify one's IP address, and second, most of the network users are simply not capable of doing IP spoofing since it requires expert skills. Moreover, some restricted services require proper user authentication, and in this case the IP address spoofing itself does not solve the problem of reliably accessing these services.

It is the aim of the present invention to provide a solution for roaming customers allowing them to access in a reliable and secure manner their homeland network services irrespective of their geographical location.

### SUMMARY OF THE INVENTION

According to a first aspect of the invention, a method is provided for a communication device having internet protocol connectivity and cellular network connectivity to access restricted information in a communication network operating on the basis of internet protocol, the method comprising:
- establishing a first type of channel, referred to hereinafter as a cellular communication network channel, between the communication device and a first network element in the communication network for accessing a second network element;
- receiving security information from the second network element on the cellular communication network channel for authenticating a user of the communication device; and
- once the user has been successfully authenticated, then accessing the restricted information by using a second type of channel, referred to hereinafter as an internet protocol channel, wherein the internet protocol channel is not a cellular communication network channel.

The communication device can be for instance a laptop computer, the first network element can be a gateway general packet radio service support node (GGSN) and the second network element can be a gateway.

The proposed method offers several advantages both for the users and the network operators. Users need to pay for local internet access only, which in many cases is a flat fee, for service access. When roaming, the users have the same experience when accessing different services as in their homeland, corporate network or operator network by using an appropriate access method. Furthermore, the users get a higher speed in the connection, compared with solutions where services are accessed through a cellular network. The proposed method also provides facilitated access to user dedicated services. The teachings of the present invention can likewise be applied to virtual private networks (VPNs) to access services in private networks.

Network operators can also benefit from the present invention, namely the proposed solution entails only very few interoperability costs because: (1) there is a strong authentication on a proven technology, such as the global system for mobile communications (GSM); and (2) techniques to access the services are open (hypertext transfer protocol (HTTP) token, VPN (requiring operator intervention), Mobile IP (requiring operator intervention), internet protocol security (IPsec), hypertext transfer protocol secure / secure sockets layer (HTTPS/SSL), hypertext transfer protocol secure / transport layer security (HTTPS/TLS), HTTP digest, direct access with a cookie, etc.). Operators are also in a better position to offer a stronger and flexible authentication method, as well as a secured and negociated channel for themselves or to a third party, as will be explained later in more detail. As the users are still in the operator's control while abroad, aggregated services can be offered:
- Operator services: direct Login→ direct access to the user home page, voice over IP (VoIP), video services, etc.;
- Company restricted access; and
- Country and/or regional access.

Furthermore, payment is facilitated as any service can be billed using GSM/Mobile service (if GSM is the cellular network). The proposed method also allows users to access content (i.e. services), such as video stream, voice, video calls, etc., with the appropriate authentication methods, and when necessary with appropriate content protection methods. Meanwhile the user is benefiting from higher bandwidth available in the area (area where the user is located), as the content is not accessed via a cellular network.

According to a second aspect of the invention, a computer program product is provided for implementing the steps of a method according to the first aspect of the present invention when loaded and run on computer means of the communication device.

According to a third aspect of the invention, a hardware card is provided for a communication device, the card having both internet protocol connectivity and cellular network connectivity to access restricted information in a communication network operating on the basis of internet protocol, the card comprising:
- a cellular access module for establishing a cellular communication network channel between the communication device and a first network element in the communication network for accessing a second network element; the cellular access module is further arranged to receive security information from the second network element on the cellular communication network channel for authenticating a user of the communication device; and
- an internet access module for accessing, after the user has been successfully authenticated, the restricted information by using a second type of channel referred to as an internet protocol channel, wherein the internet protocol channel is not a cellular communication network channel.

Other aspects of the invention are recited in the dependent claims attached hereto.

### BRIEF DESCRIPTION OF THE DRAWINGS

Other features and advantages of the invention will become apparent from the following description of non-limiting exemplary embodiments, with reference to the appended drawings, in which:
- Figure 1 is a simplified network block diagram showing the communication system where the teachings of the present invention can be applied in accordance with a first embodiment of the present invention;
- Figure 2 is a flow chart illustrating the data access method in accordance with the first embodiment of the present invention;
- Figure 3 is a simplified network block diagram showing the communication system where the teachings of the present invention can be applied in accordance with a second embodiment of the present invention;
- Figure 4 is a flow chart illustrating the data access method in accordance with the second embodiment of the present invention; and
- Figure 5 is a simplified network block diagram showing the communication system where the teachings of the present invention can be applied in accordance with a third embodiment of the present invention.

### DETAILED DESCRIPTION OF EMBODIMENTS OF THE INVENTION

Some embodiments of the present invention will be described in the following in more detail with reference to the attached figures.

The invention is about the use of a mobile access (cellular network) for accessing restricted internet/intranet services by other communication means such as wireless fidelity (WiFi) or fixed line. Those services are granted by the homeland mobile operator. The purpose of the invention is to enable roaming users to access the same type of service(s) as if they were located in their homeland, in a restricted zone such as a company, or at home.

Thus, the present invention allows a seamless authentication for the user to access a service for which access is restricted. For instance, the following situations become possible:
- A user whose homeland is H, wanting to access content from that same homeland H while travelling abroad, will not be geoblocked anymore because of content rights issues;
- A user can directly/smoothly access his/her company services; and
- A user can directly/smoothly access operator premium content.

Once a user's computer is internet IP connected (e.g. WiFi hotspot), this invention enables the user to access any services granted by his/her mobile operator by using a cellular network (such as GSM) authentication channel prior to the service authorisation. This authorisation will be executed and delivered for the access to the internet/intranet IP operator services. The cellular network channel is considered to be secure enough to communicate some sensitive authentication information.

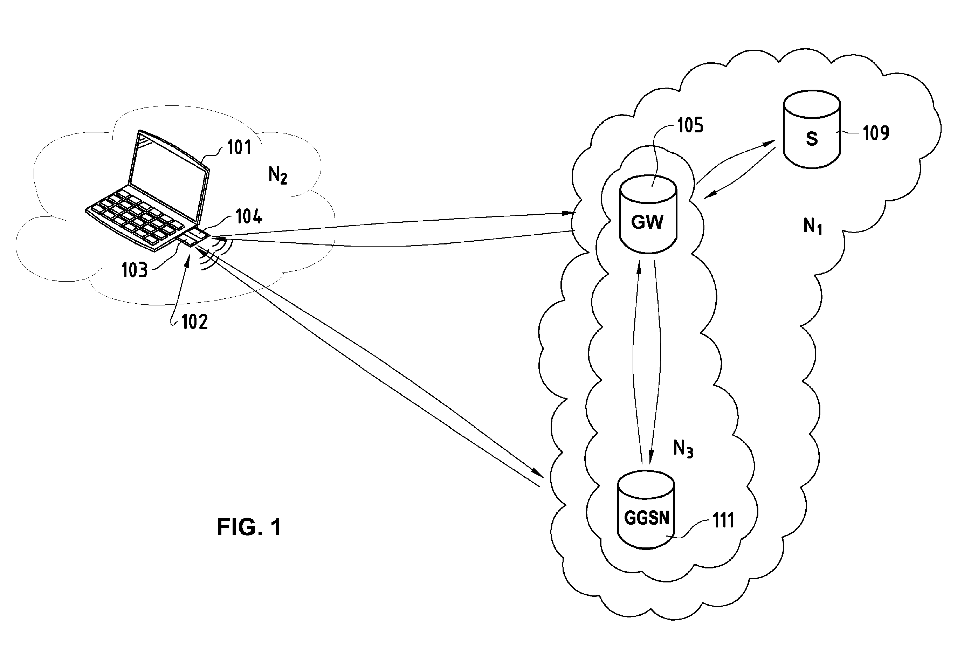

Figure 1 shows a simplified communication system block diagram according to the first embodiment of the present invention. Three different networks are referred to by N₁ (first network), N₂ (second network) and N₃ (third network). Here N₁ refers to the homeland network, N₂ refers to the visited network, where the user of the communication device or network access device 101, in this example a laptop computer, is currently roaming, and N₃ refers to an operator cellular communication network. In this example the first and second networks are characterised by their specific IP addresses. For instance, the first network N₁ is a homeland IP network, whereas the second network N₂ represents an IP network of another country. The third network N₃ can be considered to be a subnetwork of the first network N₁.

The laptop computer 101 is equipped with a specific hardware module 102, in this example a hardware card that can be removably connected to the laptop. On the laptop 101 there is provided a specific slot to accommodate the hardware card 102. The hardware card 102 contains a cellular access module (interface) 103 as well as an internet access module (interface) 104 and a software together with its driver, so that the software is arranged to centrally control the operation of these modules. The laptop 101 is arranged to access by using the internet access module 104 the internet wirelessly, and the cellular network by using the cellular access module 103. Therefore, the card 102 is a dual WiFi/cellular network card with embedded software.

The internet access module 104 is arranged to operate on a first type of channel, which is called an IP channel (and is not a cellular network channel), whereas the cellular access module 103 is arranged to operate on a second type of channel, which is called a cellular channel. Both channels can be operated based on IP. The cellular network can be e.g. any second generation (2G) network, such as a GSM, or third generation (3G) network, such as a universal mobile telecommunications system (UMTS), or any future cellular network. Understood here by a cellular network is a radio network made up of a number of radio cells each served by at least one fixed-location transceiver known as a cell site or base station. These cells cover different areas to provide radio coverage over a wider area than the area of one cell, so that a variable number of portable transceivers can be used in any one cell and moved through more than one cell during transmission (handover procedure). Roaming agreements may stipulate how the data and signalling should flow between an end user and a home operator network when roaming.

If the laptop 101 uses a wireless internet access, then the related router or set-top box is also equipped with a new hardware module or card. In this case the card would be an IP-Ethernet/cellular network card with embedded software.

In Figure 1 there are further shown three network elements located in the homeland N₁, namely a gateway (GW) 105, a data server (S) 109 and a GGSN 111. The server 109 in the homeland network can be any entity offering a service or content to end users. In this example the gateway 105 is managed by a local internet service provider, and is an interface between the homeland network, the cellular network and external networks, such as N₂.

The GGSN 111 is arranged to communicate with the gateway 105. The GGSN is a main component of a general packet radio service (GPRS) network, which is an example of a cellular communication network. The GGSN is responsible, either alone or together with other network elements, for the interworking between the GPRS network and external packet switched networks, like the internet.

From an external network's point of view, the GGSN is a router to a subnetwork, because the GGSN hides the GPRS infrastructure from the external network. The GGSN is the anchor point that enables the mobility of the user terminals in the GPRS/UMTS networks. In essence, it carries out the role in GPRS equivalent to the home agent in Mobile IP. The GGSN is also responsible for IP address assignment, and is the default router for the connected user equipment (UE).

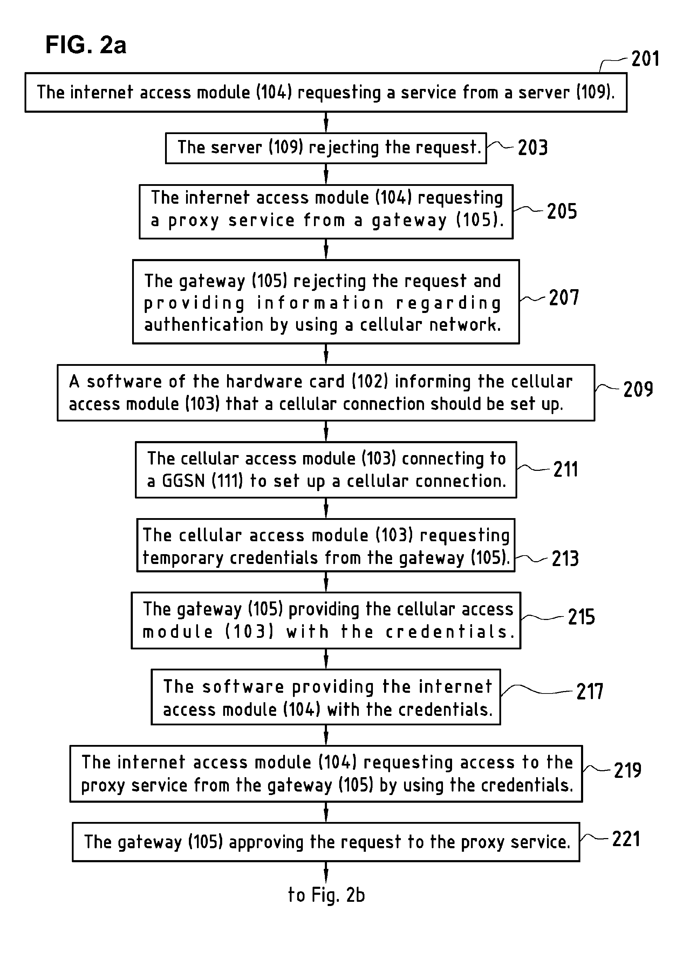

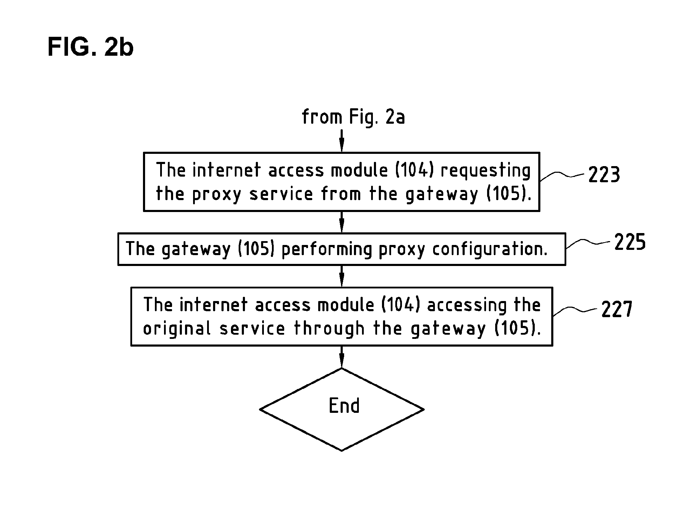

Next by referring to the flow chart of Figure 2, the data access method in accordance with the first embodiment is described. The user is roaming in the second network N₂ and would like to access data stored on the server 109. First in step 201 the user requests directly from the server 109, via internet, to access the desired service, such as streaming or progressive download, that the server 109 offers. However, the server 109 notices, e.g. based on the IP address of the user, that the user is not located in the network N₁, and for this reason in step 203 the server 109 rejects the user request. The server 109 may optionally also provide information regarding the gateway 105 that the hardware card 102 should contact next.

In step 205, the internet access module 104 requests proxy service (i.e. the desired service through the gateway 105) from the gateway 105. The hardware card 102 either knows to which gateway 105 it should connect or this information is received from the server 109. The gateway 105, however, rejects in step 207 the user request as the gateway 105 cannot authenticate the user as the user request is unknown. When rejecting the request, the gateway 105 also informs the hardware card 102 about what it should do next by doing at least one of the following. The gateway 105 informs the hardware card 102 to authenticate itself through a specific realm, which can be a specific cellular network operator. The gateway 105 may also give a specific access point name (APN), which can be e.g. a specific cellular network operator proxy service. It is also possible for the gateway 105 to give to the hardware card 102 an internal universal resource locator (URL) of the gateway 105 or an internal IP address of the gateway 105, so that cellular network modules are able to find the gateway 105.

In some cases a cellular network connection is already set up by the cellular access module 103. This would be beneficial as the delay in setting up the cellular network connection can be avoided at this stage of the procedure. However, if the cellular connection is not yet running, then in step 209 the software of the hardware card 102 informs the cellular access module to set up the cellular network connection. A cellular communication channel, such as a GSM or 3G channel, is then established in step 211 by the cellular access module between the laptop 101 and the GGSN 111. The cellular connection is set up as is known in the art, and is thus not described in more detail in this context. The GSM/3G channel plays the role of a mobile channel authenticator. In accordance with this embodiment, this channel is a signalling channel, and is thus only used for transferring sensitive data or information. As a result of setting up the cellular connection, the GGSN 111 allows a relatively secure and proven cellular connection.

In order for a roaming user to access restricted services on the server 109, the authentication and authorisation are established on the GSM/3G channel first. Once the GSM/3G channel is opened, security information, such as cookies, password, port address, VPN parameters, token IDs, local IP address for IP tunnelling (home address in a mobile IP context), etc., can be transmitted to be reused for accessing the service on a less secure IP channel such as WiFi. The GSM/3G channel is considered as secure enough to protect the data used for accessing a geoblocked service. Some cross channel authentication methods can also be implemented to reinforce the security.

In step 213, the cellular access module 103 requests temporary credentials, such as identity information and password, from the gateway 105 in order to gain access to the proxy service. In step 215, the gateway 105 responds to the cellular access module by providing the requested credentials.

Once the credentials have been received by the hardware card 102, these credentials are transferred in step 217 to the internet access module 104 by the software of the hardware card 102. Then in step 219 the internet access module 104 requests access to the proxy service from the gateway 105 by using the digest authentication procedure. The digest access authentication is one of the agreed methods a web server can use to negotiate credentials with a web user. The procedure is based on HTTP. This procedure allows user identity to be established securely without having to send a password in plaintext over the network. In step 221, the gateway 105 authenticates the user and approves the request.

Once the user request is approved, then in step 223 the internet access module 104 requests the proxy service from the gateway 105. In response to the received request, the gateway 105 performs proxy configuration in step 225. In this example, which relies on HTTP, the proxy configuration means that the gateway 105 matches an entry IP address (at the gateway 105) to an outgoing IP address (at the gateway 105), chosen from a pool of local IP addresses within a specific country, and the gateway 105 then gives the right IP entry address and possibly a port number of the gateway 105 to the internet access module 104. Finally, based on this information, the internet access module 104 can access in step 227 the desired original service at the server 109 through the gateway 105 since the user of the laptop 101 is now seen by the server 109 as a user of the network N₁.

When accessing the service provided by the server 109, the hardware card 102 communicates with the gateway 105 (by using automated tunnelling techniques on the user and the gateway sides or automated proxying techniques on the user and the gateway sides) which, in turn, communicates with the correct server 109, so that the user of the laptop 101 can access the actual data on the server 109. The requested information is then transferred to the gateway 105, which further forwards the information directly to the user on the IP channel. This so-called IP channel is a non-trusted channel such as WiFi, Ethernet-based, or similar. It is used as the bearer where user data will flow.

A simplified illustration of the first embodiment of the present invention was described above. However, many variants are possible. For instance, there can be a timer running on the gateway 105 that measures the time between two consecutive messages received from the internet access module 104 during the connection set-up procedure. If the measured time period exceeds a certain threshold (e.g. a couple of minutes), the gateway 105 can disconnect the hardware card 102 from the gateway 105. In this case the hardware card may have to start the whole access request procedure from the beginning. Alternatively, there can be a "ticket" valid for a certain time period (e.g. 20 minutes) given to the user. The service is then shut down for this user after the expiration of this time period. The time can be set to run from the first communication received from the user by the gateway 105. It is also possible for the user to ask before the expiration of the time period for a new ticket to prolong the service period.

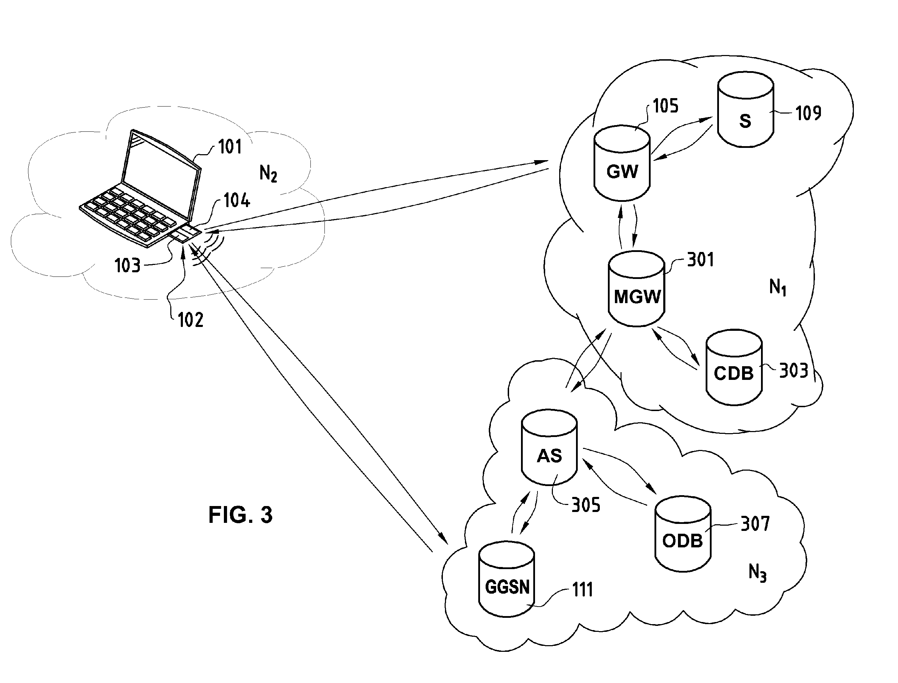

Figure 3 shows a simplified block diagram in accordance with the second embodiment of the present invention. The second embodiment of the present invention provides a very reliable and secure way to access the restricted service. In addition to the network elements shown in Figure 1, there are further shown a mediation gateway (MGW) 301, a company database (CDB) 303, an operator application server (AS) 305 and an operator database (ODB) 307.

The mediation gateway 301 is a gateway that performs transaction between the operator and the company, and in this example is located on the company premises. It has a secured connection with the application server 305. It is arranged to check the company user profiles by accessing the company database 303 and to fetch relevant parameters, and like the application server 305, it is also arranged to handle and filter requests from the user. For instance, the mediation gateway 301 can take a decision to forward/reject user requests initially submitted by the cellular access module 103.

The application server 305 is responsible for authenticating the user on the service layer. It is also responsible for the service logic associated with that user (e.g. the service logic based on a profile). The application server 305 is the entity that contacts the gateway 105 and initiates a connectivity request on behalf of the user. The application server 305 acts as a back-to-back user agent in order to transmit to the cellular access module 103 any security information received from the gateway 105 or mediation gateway 301 together with any additional connectivity/authentication information useful for the internet access module 104.

The operator database 307 contains user profiles for users that are subscribers for the operator that manages the database. The user profiles may contain for instance the following information: subscriber service type, subscriber home address, international mobile subscriber identity (IMSI), biometric user data, billing information, etc. The subscriber service type may further contain security type, security parameters and indication about the hardware card type, i.e. private card or corporate card.

In this embodiment, the gateway 105 is arranged to provide temporary connection parameters to be relayed by the application server 305, and in this example also by the mediation gateway 301, to the cellular access module 103, as will be explained below in more detail.

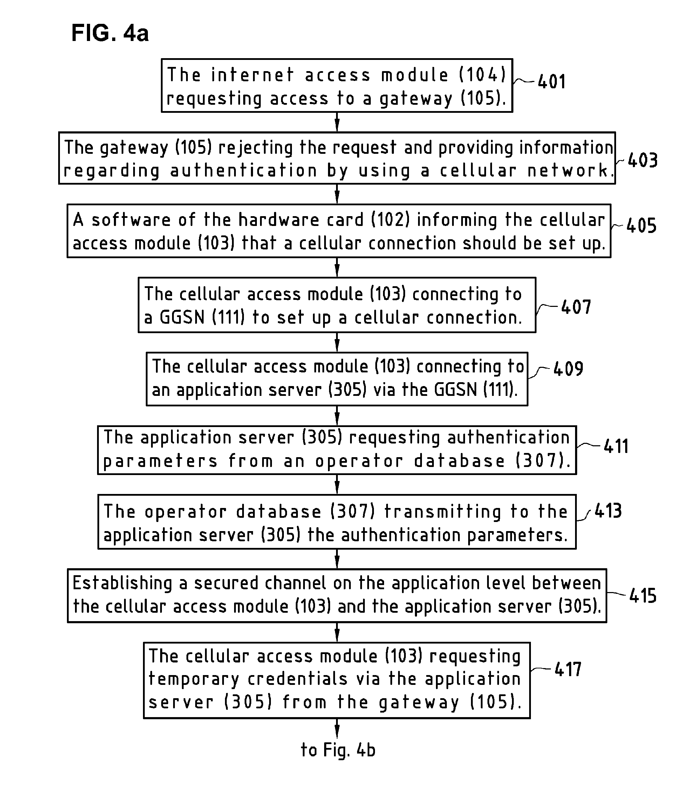

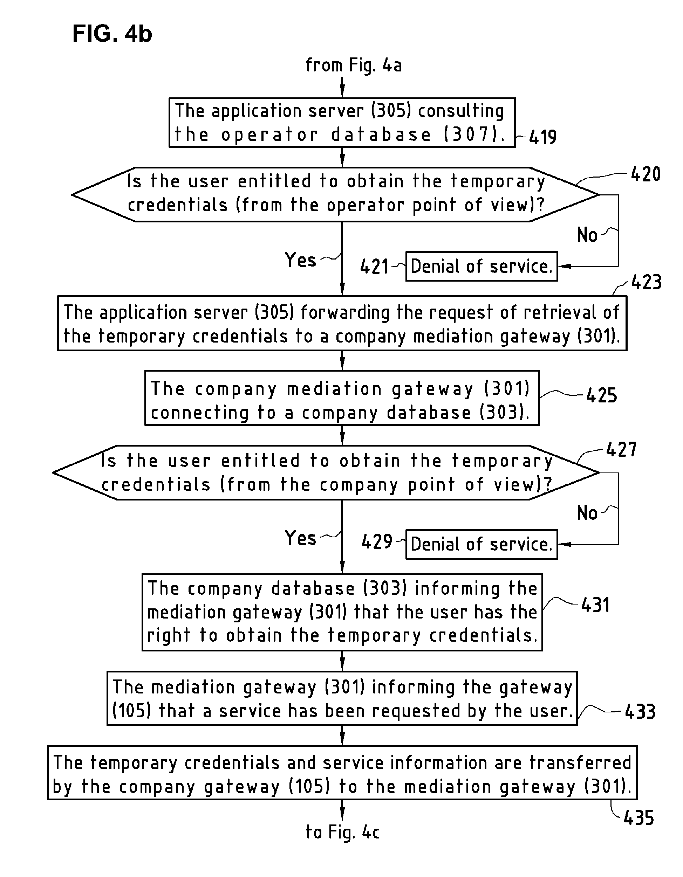

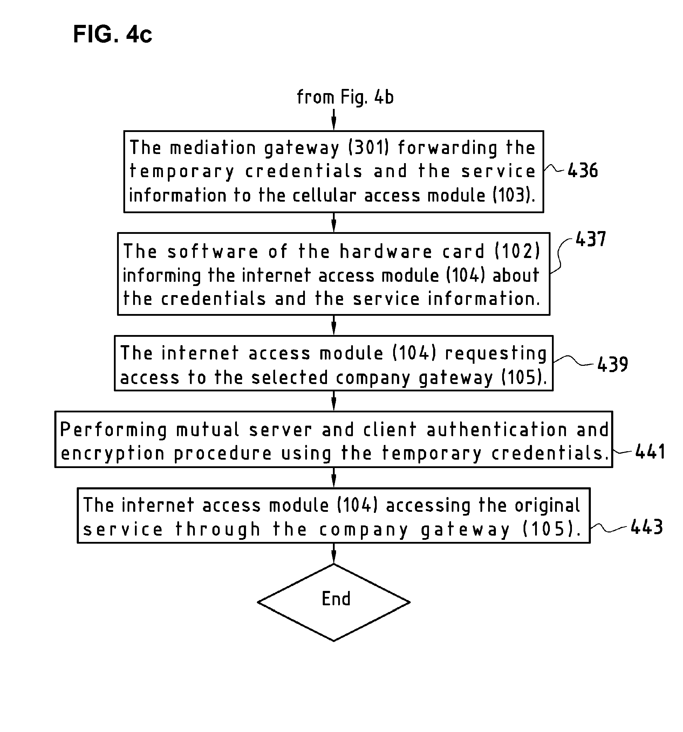

The data access method in accordance with the second embodiment is described next in more detail with reference to the flow chart of Figure 4. In this embodiment, the network N₁ (Figure 3) illustrates a company network, whereas the network N₃ (Figure 3) illustrates a cellular operator network.

In step 401, the internet access module 104 requests access to a company gateway 105 (in this example this gateway could also be called a serving gateway) in order to access a service on a server 109. In step 403 the gateway 105 rejects the request as the user request is unknown. When responding to the internet access module, the gateway 105 also provides information to the internet access module 104 regarding authentication by using a cellular network. Then in step 405 a software of the hardware card 102 informs the cellular access module 103 that a cellular connection should be set up.

In step 407, the cellular access module 103 connects to a GGSN 111 to set up a cellular connection (network registration) with the appropriate dedicated access point name in order to establish a cellular operator channel with the application server 305. Next, in step 409, the cellular access module 103 connects to the application server 305 via the GGSN 111 to set up a registration at the application level by using e.g. universal integrated circuit card (UICC) credentials or biometrics parameters.

In step 411, the application server 305 requests authentication parameters from the operator database 307, where binding of the user parameters used for network registration and application registration is established. In step 413, the operator database 307 transmits to the application server 305 the authentication parameters that enable the authentication of the user with the cellular access module 103 on the cellular network interface. The registration or authentication procedure can be done by using standardised ways, such as IP multimedia subsystem possibly combined with single sign-on (SSO) using a generic bootstrapping architecture. In step 415 a secured channel on the application level between the cellular access module 103 and the application server 305 is established. Now the signalling exchange between cellular access module 103 and the application can start.

In step 417, the cellular access module 103 requests temporary keys or credentials via the application server 305 from the gateway 105 to gain access to the service offered by the server 109. In step 419, the application server 305 consults the operator database 307 in order to be able to determine whether the user is entitled (from the operator point of view) to obtain the temporary credentials. Operator policies can apply on a user basis that restricts for specific users the obtainment of the temporary credentials. In step 420 it is determined whether there are operator defined restrictions for the user to obtain the temporary credentials. If it is determined that the user is not entitled to obtain the temporary credentials, then in step 421 the application server 305 sends a negative answer (denial of service) to the cellular access module 103.

If the application server determines that the operator has not prevented the user from obtaining the temporary credentials, then in step 423 the application server forwards the request of retrieval of temporary credentials to the company mediation gateway 301. Here it is to be noted that the application server 305 already has a previously established secured channel with the mediation gateway 301. The application server 305 can in step 423 aggregate to the message sent to the mediation gateway 301 information regarding user identity (e.g. public user identity, mobile subscriber ISDN (MSISDN) number, location information). Next, in step 425, the mediation gateway 301 connects to a company user database 303 to check whether there are restrictions defined by the company regarding the obtainment of the temporary credentials for this specific user. It is to be noted that policies can apply that allow restricted access even if the user is unknown or the user is known but may be charged for the service he wants to use. In step 427 it is thus determined whether the user is entitled to obtain the temporary credentials (from the company point of view).

If it is determined that the user is not entitled to obtain the temporary credentials (no match in the company database 303), then in step 429 the mediation gateway 301 sends a negative answer (denial of service) via the application server 305 to the cellular access module 103. If, on the other hand, it is determined that the company has not set any restrictions for this user to obtain the temporary credentials, then in step 431 the company database 303 informs the mediation gateway 301 that the user has the right to obtain the temporary credentials for accessing the desired service, and further informs about the location of the gateway 105 to be contacted. Thus, the service is granted based on the profiling rights applied according to the policies of the company. It is to be noted that the gateway 105 which should be contacted can differ from the one contacted in step 401 at the beginning of the procedure.

In step 433, the mediation gateway 301 informs the gateway 105 that a service has been requested by the user. In step 435, the temporary credentials as well as service information are transferred by the gateway 105 to the mediation gateway 301, which further forwards in step 436 these temporary credentials and the service information, including the location (e.g. IP address and/or port number) of the gateway 105 to be contacted, via the application server 305 to the cellular access module 103. In step 437, the software of the hardware card 102 informs the internet access module 104 about the credentials and the service information.

In step 439, the internet access module 104 requests access to the selected gateway 105. In step 441, a mutual server and client authentication and encryption procedure is performed, using the temporary credentials, between the internet access module 104 and the gateway 105. For instance, the following authentication and encryption procedures or protocols can be used:
- Internet key exchange (IKE) security association (SA) for lPsec to generate the encryption and authentication keys;
- Public key authentication (usually implemented with HTTPS/SSL client certificates);
- Kerberos authentication;
- Secure remote password protocol (SRP) (preferably within the HTTPS/TLS layer;
- HTTP digest access authentication with a user ID and a password;
- Cookie, with direct access (plain text).

Once the user has been authenticated by the gateway 105, the internet access module 104 accesses in step 443 the desired service through the gateway 105. This is possible, since the user is now seen by the gateway 105 as a local user. The channel between the cellular access module 103 and the gateway 105 through the application server 305 can remain open for any type of information exchange (e.g. parameters renegotiation, accounting, etc.) during the connection time. Also in the second embodiment, the timer and/or the "ticket" as described in connection with the first embodiment can be used.

In the above procedures, to enhance security, the temporary credentials sent to cellular access module 103 and transferred to internet access module 104 are not read by the operating system running on the network access device 101. Furthermore, in the second embodiment, it is assumed that the company trusts the operator. The level of security can be increased if the user is asked to type a complementary password shared with the company. In other words, in the case where the operator network is not seen as a trusted entity by the company network, in addition to the temporary keys or credentials sent to the network access device 101 while connecting to the gateway 105, the user might be requested by the gateway 105 to enter an additional password or key. In this case, the gateway 105 should consult the company database 303 to obtain the password for comparison.

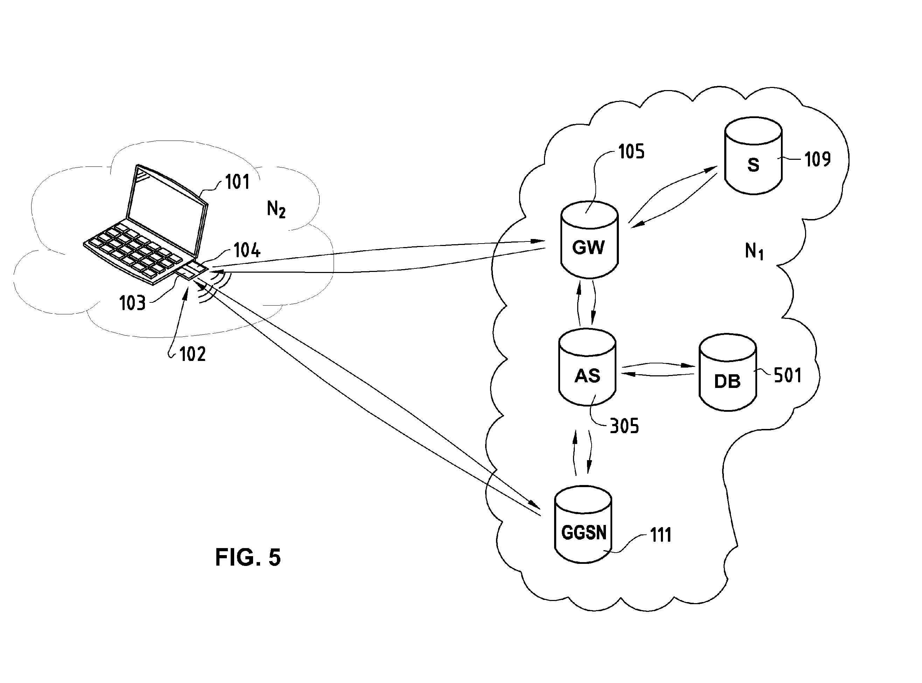

The third embodiment of the present invention is based on the second embodiment with the following changes in the network structure: the mediation gateway 301 is physically merged with the application server 305; and the company database 303 and the operator database 307 are merged. Furthermore, a separate cellular operator network N₃ is not needed, but network N₁ would in that case designate both operator and company networks, as shown in Figure 5. The main benefit of the third embodiment is that the access method can be easily chosen, in an adaptive way, based on the desired service. The access method can be part of the service. This access method might adapt a walled garden service the user is willing to use, based on its connection status, type of device, etc. The third embodiment is not described here in more detail, as a skilled man will understand this method based on the steps described above in connection with the second embodiment.

In short and as described above in connection with different embodiments, cellular access, i.e. mobile access as token (Secure ID token), is used for authentication and authorising IP proxying, VPN, or IP tunnelling techniques for accessing internet/intranet IP operator services. These services are granted by the homeland operator. The proposed solution works for any user having any IP connectivity combined with cellular network connectivity. The teachings of the present invention can be equally applied to access VPNs. A unique benefit is to avoid the use of extensible authentication protocol (EAP) subscriber identity modules (SIMs) in the customer devices, thereby offering better global security, since the international mobile subscriber identity (IMSI) is not revealed (on the IP channel).

The proposed solution enables operators to allow their customers to connect to services anywhere in the world as if they were in their homeland. The customers just need to buy a kit, including a special card and a SIM (linked to the operator), which could then just be used for internet purposes all over the world. The solution has the advantage of ease of use/access, thereby improving customer satisfaction.

While the invention has been illustrated and described in detail in the drawings and foregoing description, such illustration and description are to be considered illustrative or exemplary and not restrictive, the invention being not limited to the disclosed embodiments. Other embodiments and variants are understood, and can be achieved by those skilled in the art when carrying out the claimed invention, based on a study of the drawings, the disclosure and the appended claims. In particular the gateway 105 can be physically at the same location where the user is. Furthermore, some signalling data can be transmitted on the IP channel in combination with that transmitted over the cellular channel, with the purpose of reinforcing security.

In the claims, the word "comprising" does not exclude other elements or steps, and the indefinite article "a" or "an" does not exclude a plurality. A single processor or other unit may fulfil the functions of several items recited in the claims. The mere fact that different features are recited in mutually different dependent claims does not indicate that a combination of these features cannot be advantageously used. Any reference signs in the claims should not be construed as limiting the scope of the invention.

## Claims

1. A method for a communication device (101) having internet protocol connectivity and cellular network connectivity to access restricted information in a communication network (N₁) operating on the basis of internet protocol, the method comprising:
• establishing (211; 407) a first type of channel, referred to hereinafter as a cellular communication network channel, between the communication device (101) and a first network element (111) in the communication network for accessing a second network element (105);
• receiving (215; 435; 436) security information from the second network element (105) on the cellular communication network channel for authenticating a user of the communication device (101); and
• once the user has been successfully authenticated, then accessing (227; 443) the restricted information by using a second type of channel, referred to hereinafter as an internet protocol channel, wherein the internet protocol channel is not a cellular communication network channel.

2. A method according to claim 1, wherein the method further comprises before receiving the security information, the communication device (101) requesting (205; 401) a service from the second network element (105) and as a response to this request receiving (207; 403) information on how to authenticate itself by using the cellular communication channel.

3. A method according to any one of the preceding claims, wherein the method further comprises performing (211; 415) cellular communication channel authentication for the user, before receiving the security information, in order for the communication device (101) to be able to obtain the security information.

4. A method according to any one of the preceding claims, wherein the method further comprises, before receiving the security information, the communication device (101) requesting (213; 417) the security information from the second network element (105) on the cellular communication network channel.

5. A method according to any one of the preceding claims, wherein the method further comprises determining (420) whether there are any restrictions for the user set by an operator of the cellular communication network to access the security information.

6. A method according to any one of the preceding claims, wherein the method further comprises determining (427) whether there are any restrictions for the user, set by a company managing a server (109) where the restricted information is available, to access the security information.

7. A method according to claim 6, wherein the method further comprises, after having determined that there are no restrictions set by the company to obtain the security information, informing (433) the second network element (105) that the restricted information has been requested by the user.

8. A method according to any one of the preceding claims, wherein the restricted information is accessed based on at least one of the following techniques: internet protocol proxying and mobile internet protocol tunnelling.

9. A method according to any one of the preceding claims, wherein the security information has time validity and comprises at least one of the following: cookies, password, port address, virtual private network parameters and service information for the user device (101) to access the right second network element (105) for accessing the restricted information.

10. A method according to any one of the preceding claims, wherein the second network element is a gateway (105) between a cellular communication network (N₃) and a homeland network (N₁) or a company network (N₁).

11. A method according to any one of the preceding claims, wherein the method further comprises the second network element (105) connecting on the internet protocol channel to a correct server (109) for fetching the restricted information.

12. A method according to claim 11, wherein the second network element forwards the received restricted information directly to the user on the internet protocol channel.

13. A method according to any one of the preceding claims, wherein the restricted information is only available inside an intranet or is only directed to clients of a particular network operator.

14. A computer program product comprising instructions for implementing the steps of a method according to any one of claims 1 to 2, 4 or 8 when loaded and run on computer means of the communication device (101).

15. A hardware card (102) for a communication device (101), the card having both internet protocol connectivity and cellular network connectivity to access restricted information in a communication network (N₁) operating on the basis of internet protocol, the card comprising:
• a cellular access module (103) for establishing a cellular communication network channel between the communication device (101) and a first network element (111) in the communication network for accessing a second network element (105); the cellular access module is further arranged to receive security information from the second network element (105) on the cellular communication network channel for authenticating a user of the communication device; and
• an internet access module (104) for accessing, after the user has been successfully authenticated, the restricted information by using a second type of channel referred to as an internet protocol channel, wherein the internet protocol channel is not a cellular communication network channel.
